# EUROPÄISCHE PATENTSCHRIFT

(11) **EP 0 660 481 B1**
(45) Veröffentlichungstag und Bekanntmachung des Hinweises auf die Patenterteilung: **07.05.1997**
(21) Anmeldenummer: 94119168.6
(22) Anmeldetag: 05.12.1994
(51) Int. Cl.: H02G 15/013, H02G 15/113

(54) **Kabelmuffe aus einem längsgeteilten Gehäuse**
Cable sleeve comprising a longitudinally split housing
Manchon de câble comprenant un boîtier fendu longitudinalement

(30) Priorität: 22.12.1993 DE 4343941
(43) Veröffentlichungstag der Anmeldung: 28.06.1995
(73) Patentinhaber: RXS Kabelgarnituren Gesellschaft mit beschränkter Haftung, D-58093 Hagen (DE)
(72) Erfinder: Meltsch, Dipl. Ing. Hans-Jürgen, D-58239 Schwerte (DE); Fröhlich, Franz-Friedrich, Dipl.-Ing., D-58091 Hagen (DE); Zimmer, Dipl. Ing. Rainer, D-58579 Schalksmühle (DE)
(74) Vertreter: Fuchs, Franz-Josef, Dr.-Ing.

(56) Entgegenhaltungen:
- EP-A- 0 543 350
- DE-U- 7 620 440
- DE-U- 9 308 361
- US-A- 3 148 241
- US-A- 4 341 922

## Beschreibung

Die Erfindung betrifft eine Kabelmuffe aus einem längsgeteilten Gehäuse mit stirnseitigen Kabeleinführungen, wobei die Kabeleinführungen in einer von der Gehäusetrennebene unabhängigen Einführungsebene angeordnet sind, so daß jede Stirnseite der Kabelmuffe aus den Wandungen der Kabelmuffenschalen und einem Mittelstück gebildet ist.

Aus der europäischen Patentanmeldung 0 543 350 A1 ist eine derartige Kabelmuffe bekannt, die aus längsgeteilten Kabelmuffenschalen besteht. Die Kabeleinführungen werden in einer separaten von der Gehäusetrennebene unabhängigen Einführungsebene eingebracht, so daß beim Wiederöffnen der Kabelmuffe die Kabeleinführungsbereiche und damit die Kabeleinführungsabdichtungen unberührt bleiben. Diese Kabelmuffe ist allerdings nur entlang der Längsseiten mit Verschlußelementen versehen, so daß die Muffenschalen entsprechend stabil ausgebildet sein müssen, um an den Stirnseiten nicht auseinanderzuklaffen. Ferner besitzt der Innenraum dieser Kabelmuffe keine modifizierten Einrichtungen für eine übersichtliche Anordnung der zu schützenden Vorrichtungen, so daß zusätzliche Bauteile und Montagearbeiten nötig sind.

Das Dokument DE-U-93 08 361 beschreibt eine Kabelmuffe aus einem längsgeteilten Gehäuse mit in der Gehäusetrennebene angeordneten Kabeleinführungsöffnungen. Diese Kabelmuffe vefügt außerdem über Aufnahmen für Dichtelemente an den Kabeleinführungsöffnungen und über an der Längsseite der Kabelmuffe angeordneten Verschlußvorrichtungen bestehend aus in Längsrichtung sich keilförmig erweiternden Verschlußwülsten und diese umgreifenden Verschlußschienen.

Für vorliegende Erfindung liegt nun die Aufgabe zugrunde, eine Kabelmuffe zu schaffen, bei der weitgehend alle benötigten Einzelteile bereits im Innenraum vorhanden sind, wobei zusätzlich die Verschlußverhältnisse in der Trennebene an den Stirnseiten der Kabelmuffe verbessert werden sollen. Die gestellte Aufgabe wird mit einer Kabelmuffe der eingangs angegebenen Art dadurch gelöst, daß im Inneren der Kabelmuffenschalen mindestens eine Montageplatte montierbar ist, daß an den Kabeleinführungsöffnungen zentrierbare Kabelabfangvorrichtungen angeordnet sind, daß Aufnahmen für Dichtelemente an den Kabeleinführungsöffnungen angeordnet sind und daß mindestens eine U-förmige Verschlußschiene an Verchlußwülsten einer Stirnseite und der Längs seiten entlang der Gehäusetrennebene angeordnet ist, wobei alle Schenkel der Verschlußschiene eine der Wulstform angepaßte Nut aufweisen und daß die Längsschenkel wie auch die Verschlußwülste an den Längsseiten der Kabelmuffe in Längsrichtung zusätzlich keilförmig erweitert sind.

Vorteile an der Erfindung sind nun in erster Linie darin zu sehen, daß die Kabelmuffe mit allen erforderlichen Einrichtungen versehen ist, die bei Anfertigung eines Kabelspleißes bezüglich des inneren Aufbaues, der Abdichtungen mit zentrierenden Kabeleinführungen und die Möglichkeit für verschiedene Abdichtungsmethoden benötigt werden. Ferner ist von Vorteil, daß die stirnseitigen Trennebenen zusätzlich mit einem versteifenden Verschlußzwischenteil gesichert werden, so daß zum Beispiel Aufwölbungen und damit die Gefahr von Undichtigkeit ausgeschlossen sind. Diese Modifizierung der Kabelmuffe ist somit eine für den Monteur leicht zu handhabende Einheit, bei der am Montageort bezüglich der Montageart eine große Auswahl von Möglichkeiten gegeben ist.

Die Erfindung wird nun anhand von einundzwanzig Figuren näher erläutert.
- Figur 1: zeigt ein allgemeines Modell einer Kabelmuffe gemäß der Erfindung.
- Figur 2: zeigt den Einsatz einer Montageplatte.
- Figur 3: zeigt die Anordnung von Dichtungskammern für vergießbare Kabeleinführungen.
- Figur 4: zeigt eine Dichtungseinlage.
- Figur 5: zeigt eine weitere Dichtungseinlage.
- Figur 6: zeigt eine Kabeleinführung mit einem Schrumpfschlauch.
- Figur 7: zeigt eine Kabeleinführung mittels einer Stopfbuchse.
- Figur 8: zeigt eine Kabeleinführung mit einer Kabelklemme innerhalb der Stopfbuchse.
- Figur 9: zeigt eine Kabeleinführung mit konischen Klemmelementen.
- Figur 10: zeigt eine Kabeleinführung mit einer eingefüllten Dichtungsmasse.
- Figur 11: zeigt eine Kabeleinführung mit einer elastischen Dichtungsplatte.
- Figur 12: zeigt eine Kabelabfangung in der Kabeleinführungsöffnung.
- Figur 13: zeigt wiederum eine Kabelabfangung in der Kabel einführungsöffnung.
- Figur 14: zeigt eine weitere Möglichkeit der Kabelabfangung.
- Figur 15: zeigt eine Möglichkeit zur Kabelzentrierung in der Kabeleinführungsöffnung im Schnittbild.
- Figur 16: zeigt die Frontansicht der Kabelzentrierung nach Figur 15.
- Figur 17: zeigt eine Abfangvorrichtung für ein im Kabel befindliches Zentralelement.
- Figur 18: zeigt eine U-förmige Verschlußschiene.
- Figur 19: zeigt ein Ausführungsbeispsiel einer Kabelmuffe gemäß der Erfindung in Längsansicht.
- Figur 20: zeigt eine Muffenschale der Kabelmuffe nach Figur 19 in Draufsicht.
- Figur 21: zeigt eine Innenansicht auf die Stirnseite der Kabelmuffe nach Figur 19.

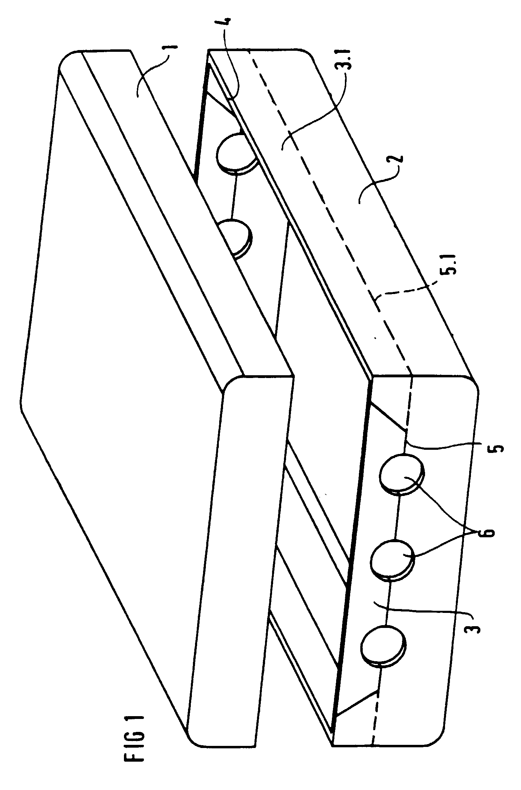

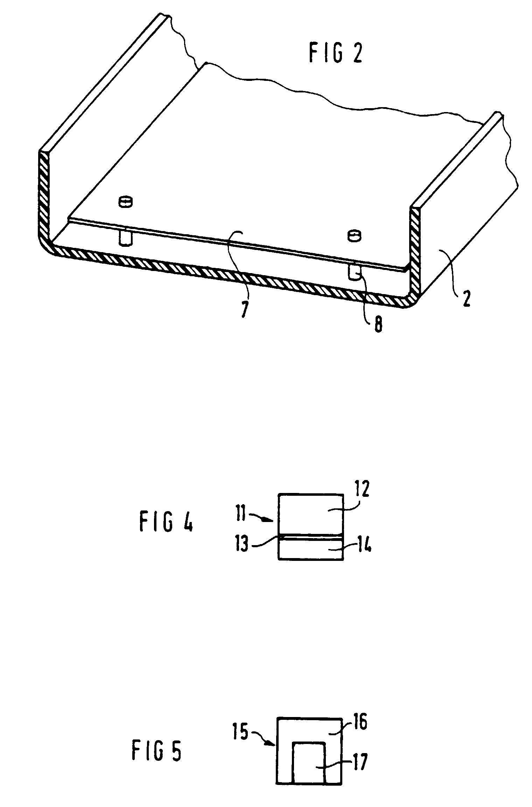

Die Figur 1 zeigt das Prinzip der Kabelmuffe gemäß der Erfindung, die aus einer oberen Muffenschale 1, aus einem Mittelteil 3 bzw. 3.1 und einer unteren Muffenschale 2 besteht. Die Besonderheit liegt insbesondere auch darin, daß auf die untere Muffenschale 2 nach dem Einlegen der Kabel in die Einführungsöffnungen 6 das Mittelteil 3 bzw. 3.1 aufgesetzt wird, so daß diese beiden Teile mit den eingeführten Kabeln eine Einheit bilden. Anschließend oder gleichzeitig damit erfolgen weitere Montagearbeiten bezüglich der Kabelzentrierungen, Kabelabfangungen und Kabelabdichtungen. Die obere Muffenschale 1 kann nun unabhängig von dieser komplett montierten Einheit auf- oder abgenommen werden, wobei die Kabeleinführungen zwischen der unteren Muffenschale 2 und dem Mittelteil 3 bzw. 3.1 davon unberührt bleiben. Dabei kann das Mittelteil zum Beispiel nur aus stirnseitigen Einsätzen 3 oder auch als gesamtumlaufendes Mittelteil 3.1 ausgeführt sein. Die eigentliche Gehäusetrennebene 4, in der eine umlaufende elastische oder plastische Dichtung oder deren Kombination eingesetzt wird, ist dabei jeweils gleich und unabhängig von der Kabeleinführungsebene 5 bzw. 5.1. In der Kabeleinführungsebene 5 wird vorzugsweise - zumindest im Bereich der Kabeleinführungsöffnungen 6 - ein plastisches Dichtungsmaterial eingelegt, da sich damit gleichzeitig eine gewisse Abdichtung im Kabeleinführungsbereich erzielen läßt. Figur 2 zeigt, daß innerhalb der Muffenschale 2 eine Montageplatte 7 auf Abstandbolzen 8 eingesetzt ist. Dies beschränkt sich jedoch nicht nur auf einfache Montageplatten; es können auch bei Bedarf entsprechend ausgebildete oder speziell modifizierte Einlagen eingebracht werden. Ebenso ist möglich, daß mehrere Montageplatten hintereinander oder übereinander angeordnet werden. In jedem Fall werden damit die Montagearbeiten erleichtert, da dadurch zum Beispiel auch eine Montage außerhalb der Muffenschalen vorgenommen werden kann. Nach Abschluß der Arbeiten wird dann die fertigmontierte Einheit in der Muffenschale 2 befestigt.

Die Figur 3 vermittelt ein Beispiel für den Einsatz von Aufnahmen 9 für Dichtungselemente 10 im Bereich der Kabeleinführungsöffnungen 6, wobei die bereits beschriebene Ausbildung der Muffenschalen 2 mit zusätzlicher Kabeleinführungsebene erhalten ist. Hinter jeder Kabeleinführungsöffnung 6 ist hier eine Aufnahme 9 in Form einer Kammer zur Aufnahme von Dichtungsmaterial angeordnet, wobei all diese Aufnahmen 9 auf der nach innen gerichteten Seite Ausführungsschlitze aufweisen, in die Dichtungsstopfen 10.1 einschiebbar sind. Diese Kammern sind beispielsweise an den Muffenschalen angespritzt oder werden als Fertigteile an den Muffenenden eingesetzt. In diese Kammern werden dann vorzugsweise gießbare und aushärtende Dichtungsmaterialien, zum Beispiel herkömmliche Zweikomponenten-Gießharze, eingegossen.

Figur 4 zeigt eine kombinierte Dichtungseinlage 11 für die Abdichtung der Gehäusetrennebene. Sie besteht aus einer Schicht 12 aus elastischem Material, zum Beispiel Silikon oder EPDM, einer Trägerzwischenlage 13 aus Metall oder Kunststoff und einer Schicht 14 aus plastischem Material, zum Beispiel aus dauerplastischem Dichtmaterial auf der Basis von Butylkautschuk.

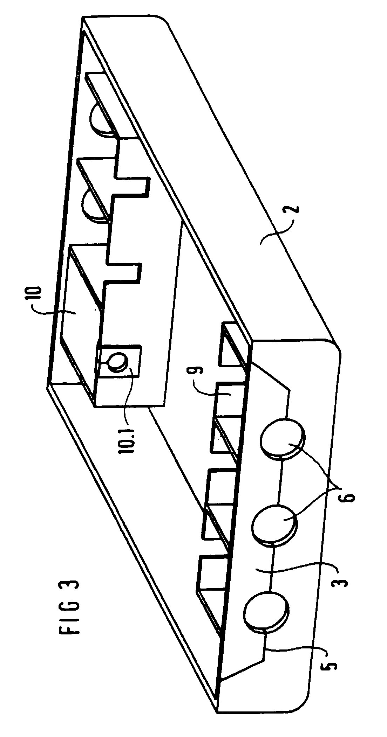

Figur 5 zeigt eine kombinierte Dichtungseinlage 15 einer Materialienkombination aus einer Schicht 16 aus elastischem und einer Schicht 17 aus plastischem Material. Zusätzlich ist bei diesem Beispiel eine besondere Struktur gewählt, so ist die elastische Schicht 16 in U-Form gestaltet und zwischen den beiden U-Schenkeln mit elastischem Material 17 ausgefüllt. Dies hat den Vorteil, daß das plastische Material nicht frei nach außen abfließen kann.

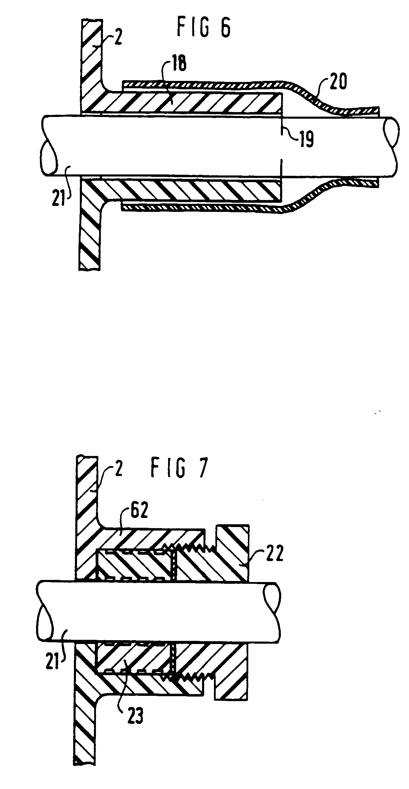

Die Figuren 6 bis 10 zeigen Ausbildungen von Kabeleinführungen in der unteren Muffenschale 2, die in der Kabeleinführungsebene 5 (siehe Figur 1) ausgebildet sind. Im wesentlichen sind diese Kabeleinführungen als Kabeleinführungsstutzen angeformt, wobei verschiedene Abdichtungsmöglichkeiten aufgezeigt werden.

Figur 6 zeigt, daß der Kabeleinführungsstutzen 18 gegenüber dem eingeführten Kabel 21 durch einen Schrumpfschlauch 20 abgedichtet ist. Zusätzlich ist hier eine Zentriereinrichtung in Form einer lamellenartigen, umlaufenden Lippe 19 angedeutet. Beim Einführen eines Kabels wird dieses durch die Elastizität der Lippe 19 zentral ausgerichtet.

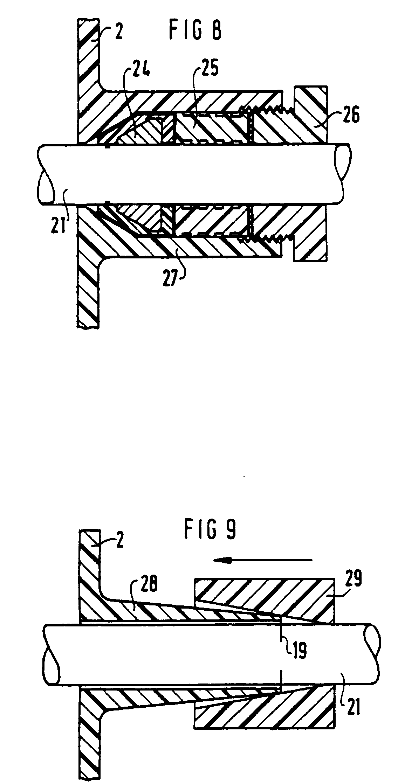

Figur 7 zeigt eine Abdichtung im Kabeleinführungsstutzen 62 in der Art einer Stopfbuchsenabdichtung. Der Zwischenraum zwischen dem Kabel 21 und der Innenwandung des Kabeleinführungsstutzens 62 wird mit einem Dichtstopfen 23 aus plastischem oder elastischem Material belegt. Anschließend erfolgt die dichtende Verpressung des Materials mit Hilfe einer ringförmigen Schraube 22.

Figur 8 ist eine Abwandlung der Abdichtung nach Figur 7, jedoch wird hier zusätzlich eine Kabelabfangung mit Hilfe einer Kabelklemme 24 vorgenommen. Diese Kabelklemme 24 ist konisch ausgebildet und wird durch das Eintreiben der ringförmigen Schraube 26 gegen die konische Wandung im Inneren des Kabeleinführungsstutzens 27 gepreßt. Bei dieser Pressung erfolgt eine Verengung der Kabelklemme 24, die dadurch das Kabel 21 fester umschließt und dadurch verklemmt.

Figur 9 zeigt ein Ausführungsbeispiel mit einem konisch ausgebildeten Kabeleinführungsstutzen 28. Auf diesen wird eine konisch angepaßte Preßhülse 29 in Pfeilrichtung aufgezogen, wodurch eine Verengung erfolgt. Die Dichtung erfolgt durch zusätzlich eingebrachte Dichtungsmittel. Hier sind wiederum elastische Lippen 19 als Zentriereinrichtungen angedeutet.

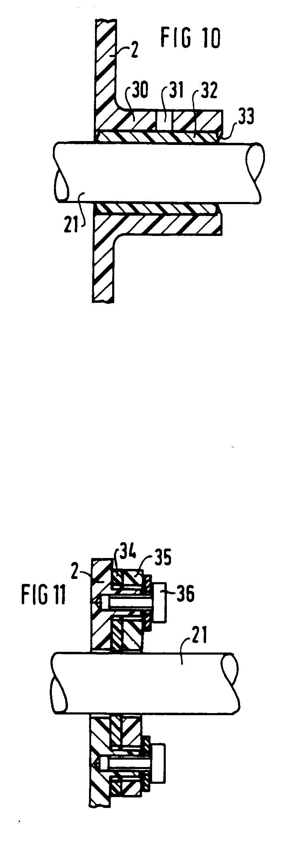

Figur 10 zeigt einen Kabeleinführungsstutzen 30, bei dem der Zwischenraum zwischen dem Kabel 21 und seiner Innenwandung mit einer Füllmasse 32, zum Beispsiel einem an sich bekannten Zweikomponenten-Gießharz, über eine Füllöffnung 31 ausgefüllt wird. Am Ende des Kabeleinführungsstutzens 30 sind elastische Lippen 33 angeordnet, die erstens eine Zentriereinrichtung beim Einführen des Kabels 21 bilden und dann als Ausflußsperre für das eingefüllte Dichtungsmittel dienen.

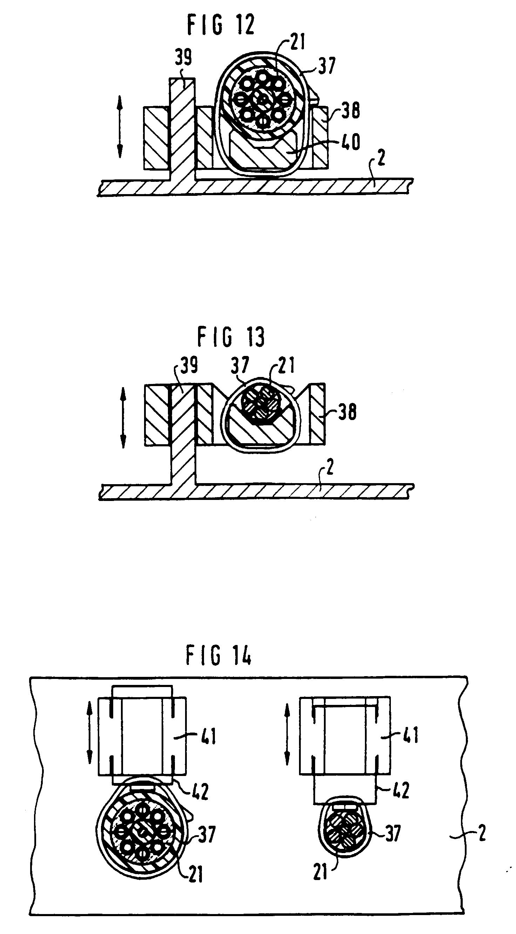

Figur 11 zeigt eine Abdichtungsmöglichkeit mit Hilfe einer Dichtungsplatte 34, die um einzelne oder um alle Kabeleinführungsöffnungen 6 einer Stirnseite herum angeordnet ist. Diese Dichtungsplatte 34 besteht aus plastischem oder elastischem Material und wird mit Hilfe einer aufgesetzten Druckplatte 35 so verpreßt, daß eine Abdichtung zum eingeführten Kabel 21 erfolgt. Der Andruck erfolgt durch Schrauben 36, die auf die Druckplatte 35 einwirken.

In Figur 12 wird eine Kabelabfangvorrichtung erläutert, die jeweils durch Verschieben auf das eingeführte Kabel 21 ausgerichtet werden kann. Auf diese Weise können unterschiedliche Durchmesser der Kabel ausgeglichen werden. Das bewegliche Klemmteil 38 besitzt ein Nutteil 40, in dessen Nut das Kabel 21 aufgelegt wird. Mit Hilfe eines Klemmbandes 37 wird es in der Nut fixiert. Da das Klemmteil 38 an einem Fixierelement 39 in der Höhe verstellbar geführt wird, kann es bei der Montage in einfacher Weise auf die Kabeleinführungsöffnung bzw. auf den Durchmesser des eingeführten Kabels ausgerichtet werden, wie der Doppelpfeil andeutet.

Die Figur 13 zeigt die Kabelabfangvorrichtung 38 nach Figur 12 in höherer Position, da hier ein Kabel 21 mit kleinerem Durchmesser eingeführt ist.

Die Figur 14 zeigt ein Ausführungsbeispiel für eine Kabelabfangung mit beweglichen, winkelförmigen Klemmteilen 42, die in den Fixierteilen 41 ausgerichtet werden. Die Fixierung des Kabels 21 erfolgt wiederum mit Hilfe von Kabelbändern. Die Wirkungsweise der Ausrichtung wird deutlich gemacht durch die parallele Einführung eines Kabels 21 mit größerem Durchmesser und einem Kabel 21 mit kleinerem Durchmesser in der gleichen Darstellungsweise. Durch die Höhenfixierung kann somit der Durchmesserunterschied bei gleicher Einführungshöhe ausgeglichen werden.

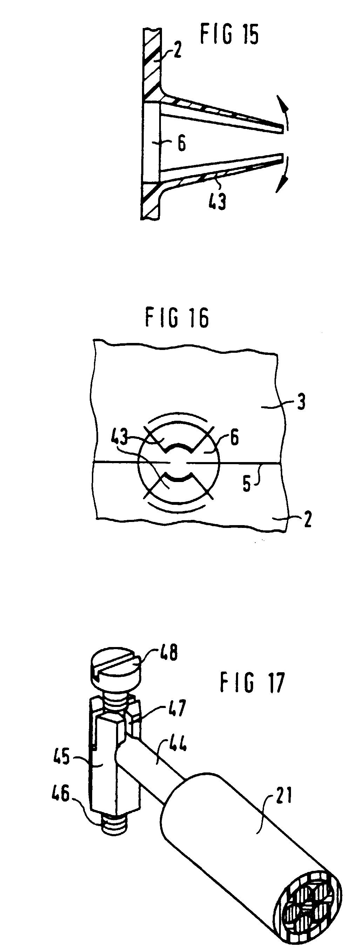

In der Figur 15 ist nochmals eine Zentriereinrichtung dargestellt, die aus konisch zulaufenden, flexiblen, segmentartigen Lippen besteht, wobei diese einen konisch zulaufenden Teilstutzen 43 bilden, dessen Teilsegmente federnd und zentrierend bei der Einführung eines Kabels 21 wirken.

Figur 16 zeigt das Ausführungsbeispiel nach Figur 15 in Frontansicht, wobei hierdurch der konische Zulauf des segmentartigen Teilstutzens 43 hervortritt. Zusätzlich ist die Kabeleinführungstrennebene 5 zwischen der unteren Muffenschale 2 und dem Mittelteil 3 eingezeichnet.

In Figur 17 ist ein Abfangelement 45 für ein im Kabel 21 mitgeführtes, zentrales, zugfestes Element 44 gezeigt. Es besteht aus einem Abfangelement 45, das einen Schlitz 47 aufweist, in den das zugfeste Element 44 eingeführt und mittels eines Klemmelementes 48 fixiert wird. Außerdem besitzt das Abfangelement 45 einen Schraubansatz 46, mit dem es am Gehäuseboden der Muffenschale 2 oder auf der Montageplatte 7 befestigt werden kann.

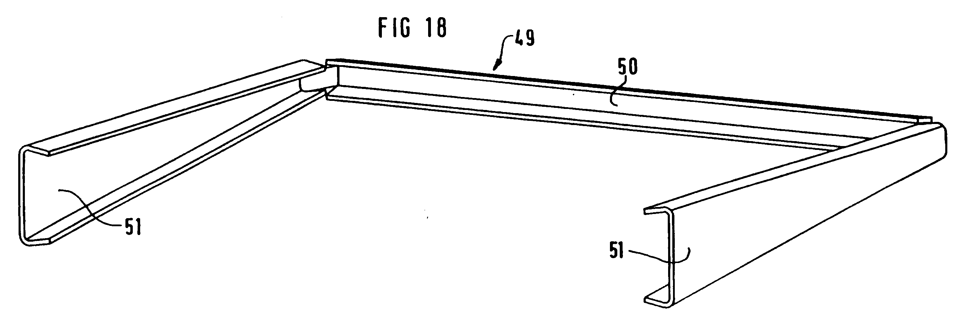

Figur 18 verdeutlicht die Ausbildung der U-förmigen Verschlußschiene 49, die aus zwei keilförmig sich zu den Enden verbreiternden Schenkeln 51 und einem Mittelteil 50 zwischen den beiden Schenkeln 51 gebildet wird. Diese Schenkel 51 der Verschlußschiene 49 enthalten, wenn sie aus massivem Material bestehen, zwei keilförmige, sich verbreiternde Nuten, die den keilförmigen Verschlußwülsten 54 an Muffenschalen 1 und 2 angepaßt sind. Bei dem hier dargestellten Ausführungsbeispiel besteht die Verschlußschiene 49 aus bandförmigem Material und die Nuten werden durch entsprechendes Umbiegen hergestellt. In jedem Fall sind die Nuten der Schenkel 51 und die entsprechenden Verschlußwülste 54 der Muffenschalen 1 und 2 zusätzlich hinterschnitten, so daß die Verschlußschiene 49 nicht abgleiten kann. Das die beiden Schenkel 51 verbindende Mittelteil 50 der Verschlußschiene 49 kann jedoch nicht hinterschnitten sein, da es an der Stirnseite auf die dort befindlichen Verschlußwülste 53 aufgeschoben werden muß. Im Endzustand werden diese jedoch fest umschlossen, so daß auch die Trennebene 4 in der Stirnseite nicht mehr aufklaffen kann. Im Regelfall werden zwar Verschlußschienen und zwar jeweils eine von der entsprechenden Stirnseite her aufgeschoben, wobei sich dann die Verschlußwülste von beiden Stirnseiten her zur Mitte hin keilförmig erweitern.

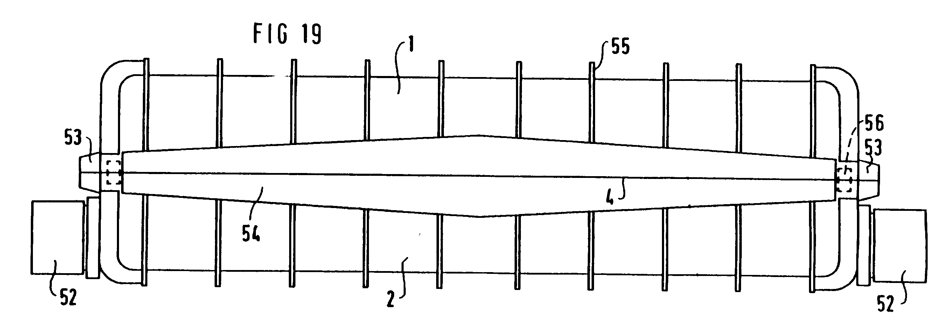

Die Figur 19 zeigt nun ein Ausführungsbeispiel einer Kabelmuffe gemäß der Erfindung aus zwei Muffenschalen 1 und 2, die zur Versteifung mit Außenrippen 55 versehen sind. Entlang dieser Muffenschalen 1 und 2 sind die in Längsrichtung keilförmig verlaufenden Verschlußwülste 54 angeordnet. In der Gehäusetrennebene 4 ist eine umlaufende Dichtung 56 eingelegt, wie an den Stirnseiten gestrichelt angedeutet ist. Weiterhin sind die trapezförmigen Verschlußwülste 53 an den Stirnseiten sichtbar, über die die Mittelteile 50 der U-förmigen Verschlußschienen 49 greifen. Weiterhin sind Kabeleinführungsstutzen 52 eingezeichnet, die unterhalb der Gehäusetrennebene 4 mit separater Kabeleinführungsebene - hier nicht sichtbar - liegen.

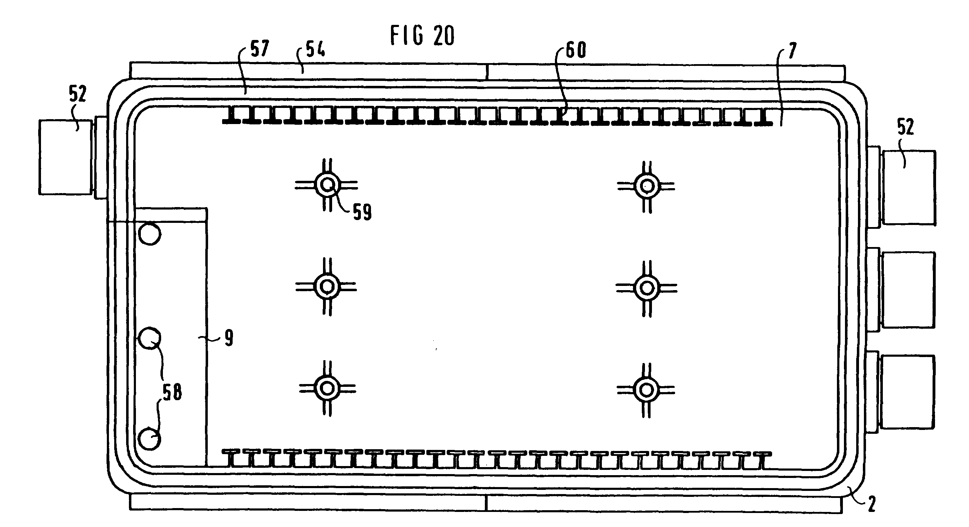

Die Figur 20 vermittelt den Einblick in die Ausführungsform nach Figur 19, wobei die Montageplatte 7 zu sehen ist. Sie besitzt zum Beispsiel seitliche Einschnitte 60, in denen einzelne Adern klemmend fixiert werden können. Zusätzliche Abstandsbolzen 59 ermöglichen zum Beispiel stapelweisen Mehrfachaufbau von Montageplatten. Auf einer Stirnseite ist beispielsweise eine gemischte Kabeleinführung vorgesehen mit Kabeleinführungsstutzen 52 und mit einer Aufnahmekammer 9, in der Befestigungsmöglichkeiten 58 für Kabelabfangungen vorgesehen sind.

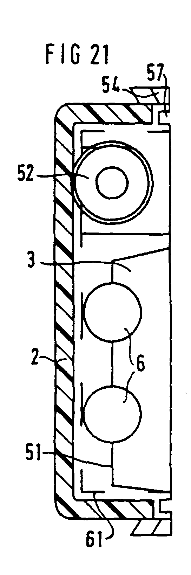

Die Figur 21 vermittelt weiterhin, daß die eine Stirnseite der unteren Muffenschale 2 nur teilweise eine separate Einführungstrennebene 5.1 aufweist, während parallel zu diesen Einführungen auch ein nicht geteilter Kabeleinführungsstutzen 52 angeordnet ist. Weiterhin sind hier die umlaufende Dichtungsnut 57 in der Gehäusetrennebene und die seitlich angesetzten Verschlußwülste erkennbar. Ferner ist durch die Andeutung 61 der nutzbare Muffenraum angedeutet.

## Patentansprüche

1. Kabelmuffe aus einem längsgeteilten Gehäuse mit stirnseitigen Kabeleinführungen, wobei die Kabeleinführungen in einer von der Gehäusetrennebene unabhängigen Einführungstrennebene angeordnet sind, so daß jede Stirnseite der Kabelmuffe aus den Wandungen der Kabelmuffenschalen und einem Mittelstück gebildet ist,
**dadurch gekennzeichnet**,
daß im Inneren der Kabelmuffenschalen (1, 2) mindestens eine Montageplatte (7) montierbar ist, daß an den Kabeleinführungsöffnungen (6) zentrierbare Kabelabfangvorrichtungen angeordnet sind, daß Aufnahmen (9, 18, 27, 28, 30, 35) für Dichtelemente (10, 20, 23, 25, 29, 32, 34) an den Kabeleinführungsöffnungen (6) angeordnet sind und daß mindestens eine U-förmige Verschlußschiene (49) an Verschlußwülsten (53, 54) einer Stirnseite und der Längsseiten entlang der Gehäusetrennebene (4) angeordnet ist, wobei alle Schenkel (50, 51, 51) der Verschlußschiene (49) eine der Wulstform angepaßte Nut aufweisen und daß die Längsschenkel (51) wie auch die Verschlußwülste (54) an den Längsseiten der Kabelmuffe (1-2) in Längsrichtung zusätzlich keilförmig erweitert sind.

2. Kabelmuffe nach Anspruch 1,
**dadurch gekennzeichnet**,
daß die Verschlußwülste (54) an den Längsseiten der Kabelmuffenschalen (1, 2) hinterschnitten und von einer hinterschnittenen Nut der Längsschenkel (51) der Verschlußschiene (49) umfaßt sind und daß die Verschlußwülste (53) an der Stirnseite der Kabelmuffenschalen (1, 2) sich nach auswärts keilförmig verjüngen und von der angepaßten Nut des an der Stirnseite befindlichen Schenkels (50) der U-förmigen Verschlußschiene (49) im aufgezogenen Zustand umfaßt sind.

3. Kabelmuffe nach einem der vorhergehenden Ansprüche,
**dadurch gekennzeichnet**,
daß das Mittelteil (3) der Kabelmuffe (1-2) als Ausschnitt in der Stirnseite ausgebildet ist.

4. Kabelmuffe nach einem der Ansprüche 1 bis 2,
**dadurch gekennzeichnet,**
daß das Mittelteil (3-3.1) der Kabelmuffe (1-2) als umlaufendes Muffenteil ausgesbildet ist.

5. Kabelmuffe nach einem der vorhergehenden Ansprüche,
**dadurch gekennzeichnet,**
daß die Montageplatte (7) auf Abstandshaltern (8) angeordnet ist.

6. Kabelmuffe nach einem der vorhergehenden Ansprüche,
**dadurch gekennzeichnet,**
daß die Aufnahmen für Dichtungseinsätze als Form- oder Gußkammern (9) ausgebildet sind.

7. Kabelmuffe nach Anspruch 6,
**dadurch gekennzeichnet,**
daß die inneren Einlässe der Form- oder Gußkammern (9) mit Dichtstopfen (10) versehen sind.

8. Kabelmuffe nach einem der vorhergehenden Ansprüche,
**dadurch gekennzeichnet,**
daß Dichtungseinlagen (11, 15) in den Trennebenen (4, 5) der Kabelmuffe (1-2) aus aus einer Kombination verschiedener Dichtungsmaterialien besteht.

9. Kabelmuffe nach Anspruch 8,
**dadurch gekennzeichnet,**
daß die Dichtungseinlage (11) aus einer Schicht (12) aus elastischem Material, einer Trägerzwischenlage (13) und einer Schicht (14) aus plastischem Material besteht.

10. Kabelmuffe nach Anspruch 8,
**dadurch gekennzeichnet,**
daß die Dichtungseinlage (15) aus einer Schicht (16) aus elastischem Material und einer Schicht (17) aus plastischem Material besteht.

11. Kabelmuffe nach einem der Ansprüche 8 bis 10,
**dadurch gekennzeichnet,**
daß die Schicht (17) aus plastischem Material von der Schicht (16) aus elastischem Material, zumindest teilweise umgeben ist, vorzugsweise U-förmig.

12. Kabelmuffe nach einem der vorhergehenden Ansprüche,
**dadurch gekennzeichnet,**
daß Kabeleinführungsstutzen (18, 62, 27, 28, 30), vorzugsweise in längsgeteilter Form, an den Kabeleinführungsöffnungen (6) angeordnet sind.

13. Kabelmuffe nach Anspruch 12,
**dadurch gekennzeichnet,**
daß ein Schrumpfschlauch (20) als Einführungsdichtung angeordnet ist.

14. Kabelmuffe nach Anspruch 12,
**dadurch gekennzeichnet,**
daß eine Stopfbuchse (62) mit Dichtung (23) und ringförmiger Druckschraube (22) als Einführungsdichtung angeordnet ist.

15. Kabelmuffe nach Anspruch 14,
**dadurch gekennzeichnet,**
daß die Stopfbuchse (27) am Innenende konisch verläuft und dort eine konische Kabelklemme (24) beinhaltet.

16. Kabelmuffe nach Anspruch 12,
**dadurch gekennzeichnet,**
daß der Kabeleinführungsstutzen (28) auf seiner Außenseite konisch verjüngt ist und daß eine konische Klemmhülse (29) klemmend aufgezogen ist.

17. Kabelmuffe nach Anspruch 12,
**dadurch gekennzeichnet,**
daß der ringförmige Zwischenraum zwischen der Innenwandung des Kabeleinführungsstutzens (30) und dem eingeführten Kabel (21) mit Füllmasse (32), vorzugsweise auf Bitumenbasis oder aus aushärtendem Harz, über eine Füllöffnung (31) ausgefüllt ist.

18. Kabelmuffe nach einem der vorhergehenden Ansprüche,
**dadurch gekennzeichnet,**
daß Zentrierelemente in Form von umlaufenden Lippen (19, 33, 43) an den Kabeleinführungsöffnungen (6) oder Kabeleinführungsstutzen (18, 62,27, 28, 30) angeordnet sind und daß diese Lippen (19, 33, 43) flexibel sind.

19. Kabelmuffe nach einem der Ansprüche 1 bis 11,
**dadurch gekennzeichnet,**
daß eine Dichtplatte (34) aus elastischem Material um die Einführungsöffnungen herum einzeln oder insgesamt angeordnet ist, daß auf die Dichtplatte (34) eine Druckplatte (35) mittels Schrauben (36) aufgepreßt ist, wobei die Dichtplatte (34) ringförmig auf die eingeführten Kabel (21) verpreßt ist.

20. Kabelmuffe nach einem der vorhergehenden Ansprüche,
**dadurch gekennzeichnet,**
daß die zentrierbare Kabelabfangvorrichtung (38-39) aus einem Fixierelement (39) und einem Ausrichtelement (38) besteht, wobei das Ausrichtelement (38) am Fixierelement (39) verschiebbar und fixierbar ist und daß das Ausrichtelement (38) eine V-förmige Zentriernut für die Aufnahme eines Kabels (21) und ein Spannelement (37), vorzugsweise einen Kabelbinder, aufweist.

21. Kabelmuffe nach Anspruch 20,
**dadurch gekennzeichnet,**
daß das Fixierelement (41) und das Zentrierelement (42) aus beweglichen, winkelförmigen Klemmteilen (42) bestseht.

22. Kabelmuffe nach Anspruch 18,
**dadurch gekennzeichnet,**
daß die flexible Lippe aus segmentartigen, konisch zulaufenden Teilstutzen (43) gebildet ist.

23. Kabelmuffe nach einem der vorhergehenden Ansprüche,
**dadurch gekennzeichnet,**
daß ein Abfangelement (45) für im Kabel (21) mitgeführte zugfeste Elemente (44) am Gehäuseboden bzw. auf der Montageplatte (7) einer Kabelmuffenschale (2 ) oder auf der Montageplatte (7) angeordnet ist, wobei Klemmelemente (48) vorgesehen sind.

24. Kabelmuffe nach einem der vorhergehenden Ansprüche,
**dadurch gekennzeichnet,**
daß die längsverlaufenden Wülste (54) an der Gehäusetrennebene (4) der Kabelmuffe (1-2) von beiden Stirnseiten her zur Mitte keilförmig verlaufen und daß von jeder Stirnseite her eine U-förmige Klemmschiene (49) aufgezogen ist.

25. Kabelmuffe nach einem der vorhergehenden Ansprüche,
**dadurch gekennzeichnet,**
daß die Montageplatte (7) vielfältige, den Bedürfnissen angepaßte Befestigungsmittel (59) aufweist.

26. Kabelmuffe nach einem der vorhergehenden Ansprüche,
**dadurch gekennzeichnet,**
daß in der Stirnseite der Kabelmuffe (1-2) geteilte und ungeteilte Kabeleinführungen (6) angeordnet sind.

## Claims

1. Cable sleeve comprising a longitudinally split housing with cable entries at the end, the cable entries being arranged in an entry parting plane which is independent of the housing parting plane, so that each end of the cable sleeve is formed from the walls of the cable sleeve shells and a centre piece,
characterized
in that at least one mount plate (7) can be mounted in the interior of the cable sleeve shells (1, 2),
in that centrable cable restraining devices are arranged on the cable entry openings (6),
in that receptacles (9, 18, 27, 28, 30, 35) for sealing elements (10, 20, 23, 25, 29, 32, 34) are arranged on the cable entry openings (6),
and in that at least one U-shaped closure rail (49) is arranged on closure beads (53, 54) of one end and the longitudinal sides along the housing parting plane (4), all the limbs (50, 51, 51) of the closure rail (49) having a groove matched to the bead shape,
and in that the longitudinal limbs (51) and the closure beads (54) on the longitudinal sides of the cable sleeve (1-2) being additionally broadened in a wedge shape in the longitudinal direction.

2. Cable sleeve according to Claim 1,
characterized in that the closure beads (54) on the longitudinal sides of the cable sleeve shells (1, 2) are undercut and are enclosed by an undercut groove of the longitudinal limbs (51) of the closure rail (49) and in that the closure beads (53) on the end of the cable sleeve shells (1, 2) taper outwards in a wedge shape and, in the drawn-on state, are enclosed by the matched groove of that limb (50) of the U-shaped closure rail (49) which is located on the end.

3. Cable sleeve according to one of the preceding claims,
characterized in that the centre part (3) of the cable sleeve (1-2) is designed as a cutout in the end.

4. Cable sleeve according to one of Claims 1 to 2, characterized in that the centre part (3-3.1) of the cable sleeve (1-2) is designed as a circumferential sleeve part.

5. Cable sleeve according to one of the preceding claims,
characterized in that the mounting plate (7) is arranged on spacers (8).

6. Cable sleeve according to one of the preceding claims,
characterized in that the receptacles for sealing inserts are designed as moulded or cast chambers (9).

7. Cable sleeve according to Claim 6,
characterized in that the inner inlets of the moulded or cast chambers (9) are provided with sealing grommets (10).

8. Cable sleeve according to one of the preceding claims,
characterized in that sealing inlays (11, 15) in the parting planes (4, 5) of the cable sleeve (1-2) are composed of a combination of various sealing materials.

9. Cable sleeve according to Claim 8,
characterized in that the sealing inlay (11) is composed of a layer (12) of elastic material, a supporting intermediate layer (13) and a layer (14) of plastic material.

10. Cable sleeve according to Claim 8,
characterized in that the sealing inlay (15) is composed of a layer (16) of elastic material and a layer (17) of plastic material.

11. Cable sleeve according to one of Claims 8 to 10,
characterized in that the layer (17) of plastic material is at least partially surrounded, preferably in a U shape, by the layer (16) of elastic material.

12. Cable sleeve according to one of the preceding claims,
characterized in that cable entry glands (18, 62, 27, 28, 30), preferably in longitudinally split form, are arranged on the cable entry openings (6).

13. Cable sleeve according to Claim 12,
characterized in that a shrink sleeve (20) is arranged as entry seal.

14. Cable sleeve according to Claim 12,
characterized in that a stuffing box (62) with seal (23) and annular compression screw (22) is arranged as entry seal.

15. Cable sleeve according to Claim 14,
characterized in that the stuffing box (27) tapers conically at the inner end and contains a conical cable clamp (24) there.

16. Cable sleeve according to Claim 12,
characterized in that the cable entry gland (28) is conically tapered on its outer side, and in that a conical clamping sleeve (29) is drawn on in a clamping manner.

17. Cable sleeve according to Claim 12,
characterized in that the annular interspace between the inner wall of the cable entry gland (30) and the inserted cable (21) is filled with a filling compound (32), preferably based on bitumen or made of a curing resin, via a filling opening (31).

18. Cable sleeve according to one of the preceding claims,
characterized in that centring elements in the form of circumferential lips (19, 33, 43) are arranged on the cable entry openings (6) or cable entry glands (18, 62, 27, 28, 30), and in that these lips (19, 33, 43) are flexible.

19. Cable sleeve according to one of Claims 1 to 11,
characterized in that a sealing plate (34) of elastic material is arranged around the entry openings, individually or as a whole, in that a pressure plate (35) is pressed onto the sealing plate (34) by means of screws (36), the sealing plate (34) being pressed in an annular manner onto the inserted cables (21).

20. Cable sleeve according to one of the preceding claims,
characterized in that the centrable cable restraining device (38-39) comprises a fixing element (39) and an alignment element (38), the alignment element (38) being able to be displaced and fixed on the fixing element (39), and in that the alignment element (38) has a V-shaped centring groove for the accommodation of a cable (21) and has a clamping element (37), preferably a cable tie.

21. Cable sleeve according to Claim 20,
characterized in that the fixing element (41) and the centring element (42) comprise movable, angular clamping parts (42).

22. Cable sleeve according to Claim 18,
characterized in that the flexible lip is formed of segment-like, conically tapering part-glands (43).

23. Cable sleeve according to one of the preceding claims,
characterized in that a restraining element (45) for high-tension elements (44) led along in the cable (21) is arranged on the bottom of the housing or on the mounting plate (7) of one cable sleeve shell (2) or on the mounting plate (7), clamping elements (48) being provided.

24. Cable sleeve according to one of the preceding claims,
characterized in that the longitudinally extending beads (54) on the housing parting plane (4) of the cable sleeve (1-2) run in a wedge shape from both ends towards the middle, and in that a U-shaped clamping rail (49) is drawn on from each end.

25. Cable sleeve according to one of the preceding claims,
characterized in that the mounting plate (7) has versatile fastening means (59) matched to the requirements.

26. Cable sleeve according to one of the preceding claims,
characterized in that split and non-split cable entries (6) are arranged in the end of the cable sleeve (1-2).

## Revendications

1. Manchon de câble constitué d'un boîtier fendu dans le sens longitudinal, comportant des entrées de câbles en face frontale, les entrées de câbles étant disposées dans un plan de séparation d'entrée qui est indépendant du plan de séparation du boîtier, de sorte que chaque face frontale du manchon de câble soit formée par les parois des coquilles du manchon de câble et par une partie médiane
caractérisé par le fait que
au moins une plaque de montage (7) peut être montée à l'intérieur des coquilles (1, 2) du manchon de câble, que des dispositifs de serrage de câbles pouvant être centrés sont disposés aux ouvertures d'entrée (6) de câbles, que des logements (9, 18, 27, 28, 30, 35) pour des éléments d'étanchéité (10, 20, 23, 25, 29, 32, 34) sont prévus aux ouvertures d'entrée (6) de câbles, et qu'au moins une barre (49) de fermeture en forme de U est disposée sur des bourrelets (53, 54) de fermeture d'une face frontale et des côtés longitudinaux le long du plan de séparation (4) du boîtier, toutes les branches (50, 51, 51) de la barre (49) de fermeture comportant une rainure adaptée à la forme des bourrelets, et que les branches longitudinales (51), de même que les bourrelets (54) de fermeture sur les côtés longitudinaux du manchon (1-2) de câble, sont en plus élargis de manière cunéiforme dans la direction longitudinale.

2. Manchon de câble selon la revendication 1,
caractérisé par le fait que
les bourrelets (54) de fermeture comportent une contre-dépouille sur les côtés longitudinaux des coquilles (1, 2) de manchon, et sont enserrés par une rainure à contre-dépouille des branches longitudinales (51) de la barre (49) de fermeture, et que sur la face frontale des coquilles (1, 2) du manchon, les bourrelets (53) de fermeture se rétrécissent de manière cunéiforme vers l'extérieur, et sont enserrés à l'état monté par la rainure adaptée de la branche (50) de la barre (49) de fermeture en forme de U située en face frontale.

3. Manchon de câble selon l'une des revendications précédentes,
caractérisé par le fait que,
la partie médiane (3) du manchon (1-2) de câble est réalisée sous la forme d'une découpe pratiquée dans la face frontale.

4. Manchon de câble selon l'une des revendications 1 à 2,
caractérisé par le fait que,
la partie médiane (3, 3.1) du manchon (1-2) de câble est réalisée sous la forme d'une partie de manchon circonférentielle.

5. Manchon de câble selon l'une quelconque des revendications précédentes,
caractérisé par le fait que,
la plaque de montage (7) est disposée sur des écarteurs (8).

6. Manchon de câble selon l'une quelconque des revendications précédentes,
caractérisé par le fait que,
les logements destinés aux garnitures d'étanchéité sont réalisés sous la forme de chambres (9) moulées ou coulées.

7. Manchon de câble selon la revendication 6,
caractérisé par le fait que,
les orifices intérieurs des chambres (9) moulées ou coulées sont munis de bouchons d'étanchéité (10).

8. Manchon de câble selon l'une quelconque des revendications précédentes,
caractérisé par le fait que,
les garnitures d'étanchéité (11, 15) dans les plans de séparation (4, 5) du manchon (1-2) de câble sont constituées d'une combinaison de différents matériaux d'étanchéité.

9. Manchon de câble selon la revendication 8,
caractérisé par le fait que,
la garniture d'étanchéité (11) est constituée d'une couche (12) en matériau élastique, d'une couche intermédiaire (13) de support, et d'une couche (14) en matériau plastique.

10. Manchon de câble selon la revendication 8,
caractérisé par le fait que,
la garniture d'étanchéité (15) est constituée d'une couche (16) en matériau élastique et d'une couche (17) en matériau plastique.

11. Manchon de câble selon l'une des revendications 8 à 10.
caractérisé par le fait que,
la couche (17) en matériau plastique est entourée, au moins partiellement, de préférence en forme de U, par la couche (16) en matériau élastique.

12. Manchon de câble selon l'une quelconque des revendications précédentes,
caractérisé par le fait que,
les tubulures (18, 62, 27, 28, 30) d'entrée de câbles sont disposées aux ouvertures d'entrée (6) de câbles, en étant de préférence séparées dans le sens longitudinal.

13. Manchon de câble selon la revendication 12,
caractérisé par le fait que,
un tube flexible rétractile (20) est prévu comme étanchéité d'entrée.

14. Manchon de câble selon la revendication 12,
caractérisé par le fait que,
un presse-étoupe (62) comportant un joint (23) et une vis de compression annulaire (22) est prévu comme étanchéité d'entrée.

15. Manchon de câble selon la revendication 14,
caractérisé par le fait que,
l'extrémité intérieure du presse-étoupe (27) est conique et comporte un collier conique (24) de câble.

16. Manchon de câble selon la revendication 12
caractérisé par le fait que,
la face extérieure de la tubulure (28) d'entrée de câbles est rétrécie coniquement, et qu'une douille de serrage (29) conique y est emmanchée par serrage.

17. Manchon de câble selon la revendication 12,
caractérisé par le fait que,
l'intervalle annulaire situé entre la paroi intérieure de la tubulure (30) d'entrée de câbles et le câble (21) inséré est comblé par l'intermédiaire d'un orifice de remplissage (31) par une masse de remplissage (32), de préférence à base de bitume ou en résine durcissante.

18. Manchon de câble selon l'une quelconque des revendications précédentes,
caractérisé par le fait que,
des éléments de centrage sont disposés sous la forme de lèvres circonférentielles (19, 33, 43) aux ouvertures d'entrée (6) de câbles ou des tubulures (18, 62, 27, 28, 30) d'entrée de câbles, et que ces lèvres (19, 33, 43) sont souples.

19. Manchon de câble selon l'une quelconque des revendications 1 à 11,
caractérisé par le fait que,
une plaque d'étanchéité (34) en matériau élastique est disposée autour de certaines ou de toutes les ouvertures d'entrée, qu'une plaque de compression (35) est pressée sur la plaque d'étanchéité (34) au moyen de vis (36), la plaque d'étanchéité (34) étant pressée de façon annulaire sur les câbles (21) insérés.

20. Manchon de câble selon l'une quelconque des revendications précédentes,
caractérisé par le fait que,
le dispositif (38-39) de serrage de câble pouvant être centré est constitué d'un élément d'immobilisation (39) et d'un élément d'ajustage (38), l'élément de centrage (38) pouvant être déplacé et immobilisé sur l'élément d'immobilisation (39), et l'élément d'ajustage (38) comporte une rainure de centrage en forme de V pour la réception d'un câble (21) et un élément de tension (37), de préférence un élément de liaison de câble

21. Manchon de câble selon la revendication 20,
caractérisé par le fait que,
l'élément de fixation (41) et l'élément de centrage (42) sont constitués d'éléments de serrage (42) mobiles de forme angulaire.

22. Manchon de câble selon la revendication 18,
caractérisé par le fait que,
la lèvre souple est constituée de tubulures partielles (43) de type segments, qui convergent coniquement.

23. Manchon de câble selon l'une quelconque des revendications précédentes,
caractérisé par le fait que,
un élément de serrage (45), destiné à des éléments (44) résistant à la traction intégrés au câble (21), est disposé sur le fond du boîtier ou sur la plaque de montage (7) d'une coquille (2) du manchon de câble ou sur la plaque de montage (7), des éléments de serrage (48) étant prévus.

24. Manchon de câble selon l'une quelconque des revendications précédentes,
caractérisé par le fait que,
les bourrelets (54), qui s'étendent dans le sens longitudinal au niveau du plan de séparation (4) du boîtier du manchon (1-2) de câble, s'étendent à partir des deux faces frontales de manière cunéiforme vers le milieu, et qu'une barre (49) de serrage en forme de U est insérée à partir de chaque face frontale.

25. Manchon de câble selon l'une quelconque des revendications précédentes,
caractérisé par le fait que,
la plaque de montage (7) comporte de multiples moyens de fixation (59) qui sont adaptés aux besoins.

26. Manchon de câble selon l'une quelconque des revendications précédentes,
caractérisé par le fait que,
des entrées (6) de câbles fendues et non fendues sont disposées dans la face frontale du manchon (1-2) de câble.
